# EUROPÄISCHE PATENTSCHRIFT

(11) **EP 3 293 496 B1**
(45) Veröffentlichungstag und Bekanntmachung des Hinweises auf die Patenterteilung: **21.11.2018**
(21) Anmeldenummer: 16188328.5
(22) Anmeldetag: 12.09.2016
(51) Int. Cl.: G01D 5/244, G01D 5/347, G01D 11/24

(54) **LÄNGENMESSEINRICHTUNG UND VERFAHREN ZU DEREN MONTAGE**
LENGTH MEASUREMENT DEVICE AND METHOD OF ASSEMBLING THE SAME
DISPOSITIF DE MESURE LONGITUDINALE ET SON PROCÉDÉ DE MONTAGE

(43) Veröffentlichungstag der Anmeldung: 14.03.2018
(73) Patentinhaber: Dr. Johannes Heidenhain GmbH, 83301 Traunreut (DE)
(72) Erfinder: SCHWEIKL, Konrad, 83352 Altenmarkt (DE)

(56) Entgegenhaltungen:
- EP-A1- 0 158 050
- WO-A1-2010/078984
- DE-A1-102015 010 349
- DE-C1- 3 402 613
- DE-U1- 8 423 946

## Beschreibung

### GEBIET DER TECHNIK

Die vorliegende Erfindung betrifft eine Längenmesseinrichtung nach den Merkmalen des Oberbegriffs des Anspruchs 1 und ein Verfahren zur Montage der Längenmesseinrichtung nach Anspruch 10.

### STAND DER TECHNIK

Die DE 34 02 613 C1 offenbart eine gattungsbildende Längenmesseinrichtung. Die Längenmesseinrichtung umfasst ein Hohlprofil, in dessen Innenraum ein Maßstab in Längsrichtung verlaufend angeordnet ist. Der Maßstab wird im Messbetrieb von einer Abtasteinheit abgetastet, die über einen Mitnehmer an einem zu messenden Objekt befestigt ist. Der Mitnehmer greift durch eine Dichtung, mit der eine in Längsrichtung verlaufende Öffnung des Hohlprofils abgedichtet ist. Die Dichtung ist in Längsrichtung gedehnt am Hohlprofil befestigt. Die Befestigung der Dichtung erfolgt durch Klemmen mittels einer Schraube und einem Klemmblech.

Nachteilig bei dieser Konstruktion nach dem Stand der Technik ist, dass für die Schraube im Hohlprofil eine Querbohrung einzubringen ist und dass durch die Querbohrung sowie durch die mit der Schraube undefiniert verdrückte Dichtung die Gefahr besteht, dass im Hohlprofil eine Undichtigkeit auftritt.

### ZUSAMMENFASSUNG DER ERFINDUNG

Der vorliegenden Erfindung liegt die Aufgabe zugrunde, eine Längenmesseinrichtung anzugeben, bei der die Abdichtung des Hohlprofils vereinfacht und verbessert ist.

Diese Aufgabe wird erfindungsgemäß durch die Längenmesseinrichtung mit den Merkmalen des Anspruchs 1 gelöst.

Die erfindungsgemäß ausgebildete Längenmesseinrichtung umfasst ein Hohlprofil, in dessen Innenraum ein Maßstab angeordnet ist und das einen längs des Maßstabs verlaufenden Schlitz aufweist, durch den bei der Positionsmessung ein Mitnehmer einer den Maßstab abtastenden Abtasteinheit hindurchgreift. Dieser Schlitz ist mittels einer entlang des Hohlprofils verlaufenden elastischen Dichtung abgedichtet und die Dichtung ist am Hohlprofil fixiert. An der Dichtung ist eine Hülse zugfest befestigt und die Hülse weist einen Anschlag auf, mit der sich die Hülse am Hohlprofil abstützt und die Dichtung dadurch am Hohlprofil fixiert.

Die Abstützung erfolgt endseitig am Hohlprofil, d.h. vorzugsweise direkt an der Stirnfläche des Hohlprofils oder alternativ an einer Längsposition im Bereich des Endes des Hohlprofils.

Zugfest befestigt bedeutet dabei, dass die Hülse formschlüssig und / oder kraftschlüssig in zumindest einer der Längsrichtungen unverschiebbar mit der Dichtung verbunden ist.

Besonders vorteilhaft ist es, wenn die Dichtung entlang des Hohlprofils an diesem angeordnet ist, indem an den beiden Enden der Dichtung jeweils eine der Hülsen zugfest befestigt ist und sich der Anschlag der Hülsen jeweils endseitig am Hohlprofil abstützt. Durch diese Maßnahme kann die Dichtung bei Bedarf in Längsrichtung gedehnt, also entlang des Hohlprofils gespannt, montiert werden. Die Dehnung beträgt beispielsweise 1% bis 3% der Länge der Dichtung im nicht gedehnten Zustand.

Vorteilhaft ist es, wenn die Dichtung ausschließlich an den beiden Enden bzw. Endbereichen des Hohlprofils fixiert ist und die Dichtung im übrigen Bereich zwischen den beiden Enden in einer Nut des Hohlprofils abdichtend verläuft. Bei der Montage wird die Dichtung von der Stirnseite des Hohlprofils her in diese Nut eingezogen.

Ist die zugfeste Verbindung mittels Formschluss zwischen Hülse und Dichtung realisiert, ist es vorteilhaft, wenn die Hülse zumindest einen nach innen weisenden Vorsprung aufweist, welcher in die Dichtung eindringt.

Der Formschluss ist besonders vorteilhaft herstellbar, wenn der zumindest eine Vorsprung eine in die eine Längsrichtung (+X) verlaufende erste Form und eine in die Gegenrichtung weisende zweite Form aufweist. Die erste Form ist als eine Art Rampe ausgebildet, welche es ermöglicht die Hülse in die eine Längsrichtung (+X) auf die Dichtung zu schieben und die zweite Form bildet einen Widerstand welcher es verhindert bzw. zumindest erschwert die Hülse gegenüber der Dichtung entgegen der einen Längsrichtung, d.h. in die Gegenrichtung (-X), zu verschieben.

Zur Verbesserung des Formschlusses kann die Hülse mehrere in Längsrichtung voneinander beabstandete und jeweils nach innen weisende Vorsprünge aufweisen.

In vielen Fällen wird der Schlitz des Hohlprofils mittels sogenannter dachförmig angeordneter Dichtungen abgedeckt. Dabei ist beidseitig des Schlitzes jeweils eine Dichtlippe in einer Nut des Hohlprofils angeordnet. Die Dichtlippe weist eine längsverlaufende Wulst und eine daran angeformte Lippe auf. Die Wulst ist in der Nut des Hohlprofils eingebracht und die Lippe ragt in den Schlitz des Hohlprofils und deckt diesen zumindest teilweise ab. Zur Fixierung einer Dichtung in Form einer derartigen Dichtlippe weist die Hülse einen Schlitz auf, wobei die Hülse die Wulst umgreift und die Lippe durch den Schlitz der Hülse in den Schlitz des Hohlprofils ragt. Die Hülse ist dabei stirnseitig in die längs des Hohlprofils verlaufende Nut eingesetzt. Bei Bedarf kann die Nut hierfür endseitig des Hohlprofils einen an die Hülse angepassten größeren Querschnitt aufweisen als in dem Bereich, in dem die Dichtlippe nur mit der Wulst in der Nut angeordnet ist. Endseitig des Hohlprofils kann anstelle einer Nut auch eine längsverlaufende stirnseitig eingebrachte Bohrung zur Aufnahme der Hülse vorgesehen sein.

Die Dichtlippe besteht in vorteilhafter Weise aus einem elastischen Kunststoff. Die Elastizität der Dichtlippe bewirkt, dass die Wulst der Dichtlippe die Hülse radial derart vorspannt, dass diese über ihren Umfang elastisch federnd an die Innenfläche der Nut oder der Bohrung des Hohlprofils gedrängt wird. Dadurch ist eine gute Abdichtung zwischen Hohlprofil und Hülse gewährleistet.

Vorteilhaft ist der Anschlag der Hülse ein radial nach außen weisender Bund der Hülse. Ist dieser Bund umlaufend ausgebildet, deckt er den umfangsmäßig verlaufenden Kontaktbereich zwischen Hülse und Nut bzw. Bohrung des Hohlprofils endseitig ab und erhöht somit die Abdichtung zwischen Hülse und Hohlprofil.

Der Anschlag an der Hülse ist aber nicht zwingend außenliegend des Hohlprofils, alternativ kann der Anschlag auch an einer anderen Längsposition der Hülse ausgebildet sein, so z.B. an dem innenliegenden Ende der Hülse.

Der Erfindung liegt weiterhin die Aufgabe zugrunde ein Verfahren anzugeben, mit dem eine einfache Montage der Längenmesseinrichtung ermöglicht wird.

Diese Aufgabe wird mit dem Verfahren gemäß des Anspruchs 10 gelöst.

Dieses Verfahren umfasst folgende Verfahrensschritte:
- zur Verfügung stellen eines Hohlprofils, das einen längsverlaufenden Schlitz aufweist, durch den bei der Positionsmessung ein Mitnehmer einer einen im Hohlprofil angeordneten Maßstab abtastenden Abtasteinheit hindurchgreift;
- zur Verfügung stellen einer elastischen Dichtung, mit der der Schlitz abdichtbar ist,
- zugfestes Befestigen einer Hülse an der Dichtung, wobei die Hülse einen in Längsrichtung des Hohlprofils wirkenden Anschlag aufweist;
- nachfolgendes Positionieren der Hülse am Hohlprofil derart, dass sich der Anschlag der Hülse am Hohlprofil abstützt und die Dichtung dadurch am Hohlprofil fixiert wird.

Vorteilhafte Ausführungen der Erfindung ergeben sich aus den Maßnahmen, die in den abhängigen Ansprüchen aufgeführt sind.

Weitere Einzelheiten und Vorteile der vorliegenden Erfindung werden anhand der nachfolgenden Beschreibung eines Ausführungsbeispiels in Verbindung mit den Figuren erläutert.

### KURZE BESCHREIBUNG DER ZEICHNUNGEN

Es zeigt
- Figur 1: eine perspektivische Ansicht einer Längenmesseinrichtung;
- Figur 2: einen Längsschnitt der Längenmesseinrichtung gemäß Figur 1;
- Figur 3: einen Längsschnitt der Längenmesseinrichtung gemäß den Figuren 1 und 2 im Bereich der Befestigung der Dichtung am Hohlprofil, und
- Figur 4: eine perspektivische Ansicht der Hülse zur Befestigung der Dichtung am Hohlprofil.

### BESCHREIBUNG DER AUSFÜHRUNGSFORM

Die Erfindung wird nachfolgend anhand eines Ausführungsbeispiels erläutert.

Diese Längenmesseinrichtung umfasst ein Hohlprofil 1, das einen abgedichteten Schlitz 11 aufweist. Bei der Positionsmessung ist im Inneren des Hohlprofils 1 eine Abtasteinheit angeordnet, die über einen durch eine elastische Dichtung 3 und den Schlitz 11 hindurchgeführten Mitnehmer mit einem zu messenden Objekt befestigt ist. Zur Positionsmessung wird der Mitnehmer der Abtasteinheit an ein erstes zu messende Objekt angebaut und das Hohlprofil 1 an ein in Längsrichtung X dazu bewegliches zweites zu messende Objekt angebaut. Die Längsrichtung X entspricht der Messrichtung. Aus Gründen der Übersichtlichkeit ist in den Figuren die Abtasteinheit nicht dargestellt.

Im Innenraum des Hohlprofils 1 ist ein Maßstab 2 in Längsrichtung X verlaufend angeordnet. Der Maßstab 2 ist beispielsweise aus Glas, Glaskeramik oder Stahl. Der Maßstab kann auch ein Stahlband sein. Der Maßstab 2 trägt auf seiner Oberseite, also zur Abtasteinheit weisend und dieser gegenüberliegend, eine Messteilung. Diese Messteilung wird im Messbetrieb von der Abtasteinheit abgetastet, vorzugsweise lichtelektrisch, dabei werden von der Abtasteinheit positionsabhängige Abtastsignale generiert. Die Messteilung kann auch magnetisch, induktiv oder kapazitiv abtastbar ausgestaltet sein, wobei es sich um eine inkrementale oder absolute Messteilung handeln kann.

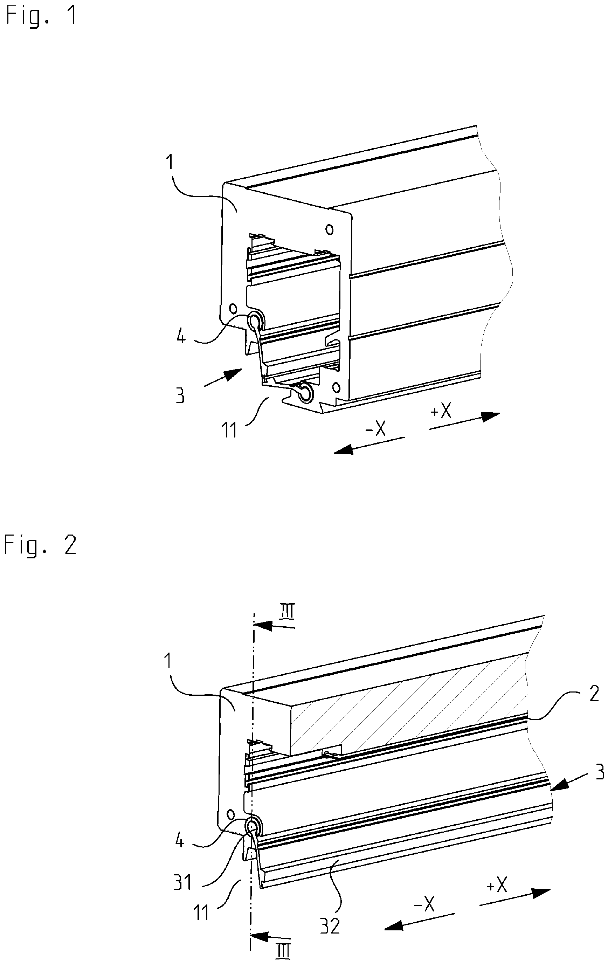

Wie in der Figur 1 dargestellt ist, besteht die Dichtung 3 im Ausführungsbeispiel aus zwei dachförmig angeordneten Dichtlippen, von denen jede erfindungsgemäß am Hohlprofil 1 befestigt ist und die mittig des Schlitzes 11 des Hohlprofils 1 aneinanderstoßen und den Schlitz 11 abdecken. In nicht gezeigter Weise kann die Dichtung 3 auch nur von einem einzigen Dichtelement gebildet sein, so kann beispielsweise der Schlitz 11 von einer Dichtung in Form einer einzigen Dichtlippe abgedeckt sein.

Die Dichtung 3 ist mittels einer Hülse 4 am Hohlprofil 1 fixiert. Hierzu ist die Hülse 4 mit der Dichtung 3 zugfest verbunden und sie weist einen Anschlag 41 auf. Im montierten Zustand stützt sich die Hülse 4 in Längsrichtung X endseitig am Hohlprofil 1 ab, wodurch die Dichtung 3 mittels der Hülse 4 am Hohlprofil 1 fixiert ist.

Die Dichtung 3 kann in Längsrichtung X auch gedehnt am Hohlprofil 1 befestigt sein, indem an den beiden Enden der Dichtung 3 jeweils eine der Hülsen 4 zugfest angeordnet ist und sich der Anschlag 41 der Hülsen 4 jeweils endseitig unter Spannung der Dichtung 3 am Hohlprofil 1 abstützt.

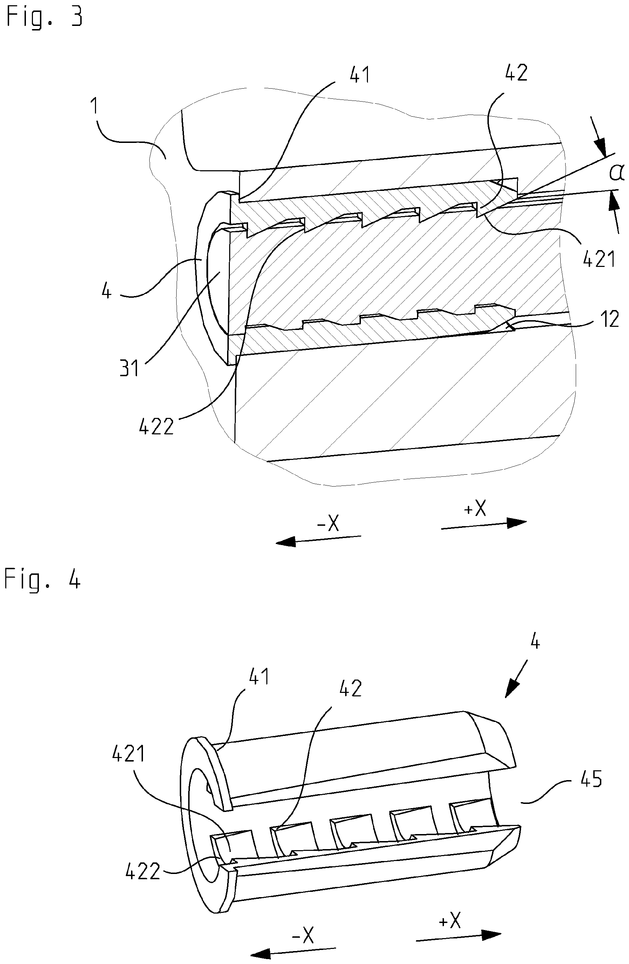

Details der Hülse 4 sind in den Figuren 3 und 4 dargestellt. Die Hülse 4 weist zumindest einen nach innen weisenden Vorsprung 42 auf, welcher in das Material der Dichtung 3 eindringt. Indem der Vorsprung 42 in die Dichtung 3 eindringt wird die Dichtung 3 elastisch verformt und stellt dadurch die zugfeste Verbindung der Hülse 4 mit der Dichtung 3 her. Als Material für die Dichtung 3 eignet sich insbesondere ein elastischer Kunststoff. Als Material für die Hülse 4 eignet sich insbesondere Kunststoff oder auch Metall.

Der Vorsprung 42 der Hülse 4 weist vorzugsweise eine in Längsrichtung X verlaufende erste Form 421 auf, die eine Rampe bildet, welche es ermöglicht die Hülse 4 gegenüber der Dichtung 3 in die Längsrichtung +X zu verschieben. Durch diese Maßnahme wird es ermöglicht, die Hülse 4 auf die Dichtung 3 bis zur gewünschten Position aufzuschieben. Der Neigungswinkel α der ersten Form 421 beträgt beispielsweise etwa 20°.

Der Vorsprung 42 der Hülse weist vorzugsweise weiterhin eine in die entgegengesetzte Richtung weisende zweite Form 422 auf, die einen Widerstand bildet, welcher es verhindert die Hülse 4 an der Dichtung 3 in die entgegengesetzte Richtung -X zu verschieben. Dieser Widerstand ermöglicht es, die Dichtung 3 auf einfache Weise an der Hülse 4 zu positionieren und zu fixieren. Der Neigungswinkel der zweiten Form 422 ist hierzu größer als der ersten Form 421 und beträgt beispielsweise etwa 90°.Die Dichtung 3 wird am Hohlprofil 1 fixiert, indem sich die Hülse 4 mit ihrem Anschlag 41 am Hohlprofil 1 abstützt.

Vorteilhaft ist es, wenn die Hülse 4 mehrere - insbesondere in Längsrichtung X voneinander beabstandete - jeweils nach innen weisende Vorsprünge 42 aufweist, welche in die Dichtung 3 eindringen und damit die zugfeste Verbindung der Hülse 4 mit der Dichtung 3 bilden.

Wie in der Figur 3 dargestellt ist, ist die Hülse 4 mit der darin gehaltenen Dichtung 3 in einer in Längsrichtung X verlaufenden Nut 12 des Hohlprofils 1 angeordnet.

Die Erfindung ist besonders vorteilhaft einsetzbar, wenn die Dichtung 3 eine Dichtlippe mit einer in Längsrichtung X verlaufenden Wulst 31 und einer daran abstehenden Lippe 32 ist. In diesem Fall ist es weiter vorteilhaft, wenn die Hülse 4 einen Schlitz 45 aufweist. Die Hülse 4 und der Schlitz 45 sind derart dimensioniert, dass die Hülse 4 den Wulst 31 umschließt und die Lippe 32 der Dichtung 3 durch den Schlitz 45 der Hülse 4 in den Schlitz 11 des Hohlprofils 1 ragt. Die geschlitzte Hülse 4 hat darüber hinaus den Vorteil, dass sie sich mit ihrer Umfangsfläche unter Spannung an die Nut 12 anpasst und dadurch diese sicher nach außen hin abdichtet. Da die Dichtung 3 und somit die Dichtlippe aus elastischem Material besteht, spannt die Wulst 31 der Dichtlippe die geschlitzte Hülse 4 derart radial vor, dass diese im in die Nut 12 eingeführten Zustand über ihren Umfang elastisch federnd an die Innenfläche der Nut 12 gedrängt wird.

Im weiteren Verlauf der Dichtung 3 ist diese in die Nut 12 eingezogen, so dass die Wulst 31 eine Abdichtung zwischen der Dichtung 3 und dem Hohlprofil 1 bildet.

Die Abdichtung zwischen der Dichtung 3 und dem Hohlprofil 1 kann weiter verbessert werden, indem der Anschlag 41 der Hülse 4 als radial nach außen weisender und umlaufender Bund bzw. Absatz der Hülse 4 ausgebildet ist. Dieser umlaufende Bund deckt den umfangsmäßig verlaufenden Kontaktbereich zwischen Hülse 4 und Hohlprofil 1 endseitig ab. Diese endseitige Abdichtung wird weiter dadurch verbessert, dass an beiden Enden des Hohlprofils 1 jeweils eine derartige Hülse 4 vorgesehen ist und die Dichtung 3 mittels der beiden Hülsen 4 gedehnt am Hohlprofil 1 fixiert ist. Dadurch wird der den axialen Anschlag 41 bildende umlaufende Bund der Hülse 4 jeweils federnd an das Hohlprofil 1 gedrängt.

Nachfolgend wird anhand der oben beschriebenen Längenmesseinrichtung noch detaillierter ein Verfahren zur Montage dieser Längenmesseinrichtung erläutert.

Dieses Verfahren umfasst die folgenden Verfahrensschritte:
zur Verfügung stellen eines Hohlprofils 1, das einen längsverlaufenden Schlitz 11 aufweist, durch den bei der Positionsmessung ein Mitnehmer einer einen im Hohlprofil angeordneten Maßstab 2 abtastenden Abtasteinheit hindurchgreift;
zur Verfügung stellen einer elastischen Dichtung 3, mit der der Schlitz 11 abdichtbar ist;
zugfestes Befestigen einer Hülse 4 an der Dichtung 3, wobei die Hülse 4 einen Anschlag 41 aufweist;
nachfolgendes Positionieren der Hülse 4 am Hohlprofil 1 derart, dass sich der Anschlag 41 der Hülse 4 endseitig am Hohlprofil 1 abstützt und die Dichtung 3 dadurch am Hohlprofil 1 fixiert wird.

Das Positionieren der Hülse 4 am Hohlprofil 1 erfolgt durch Einschieben bzw. durch Eindrücken der Hülse 4 in eine längsverlaufende Nut 12 des Hohlprofils 1 von der Stirnseite des Hohlprofils 1 her. Die endseitige Fixierung der Dichtung 3 am Hohlprofil 1 ist dadurch besonders einfach möglich, da ausschließlich eine stirnseitige Zugänglichkeit erforderlich ist.

Ist die Hülse 4 entsprechend dem Ausführungsbeispiel gemäß Figur 4 ausgebildet, wird die zugfeste Verbindung zwischen der Dichtung 3 und der Hülse 4 durch folgenden Verfahrensschritt ausgeführt:
Aufschieben der Hülse 4 auf die Dichtung 3 in die Längsrichtung +X, also gegen die - als Rampe ausgebildete - erste Form 421.

Der Maßstab 2 kann dabei vor der Montage der Dichtung 3 im Hohlprofil 2 angeordnet werden oder erst nach der Montage der Dichtung 3. Ist der Maßstab 2 ein Maßband, dann ist es vorteilhaft, wenn dieses erst nach Anbringen der Dichtung 3 in das Hohlprofil 2 eingebracht wird, beispielsweise durch Einziehen in eine im Hohlprofil 2 vorgesehene Nut.

Die Erfindung ist auch bei Längenmesseinrichtungen vorteilhaft einsetzbar, bei denen der Hohlkörper 1 aus mehreren aneinander gestoßenen Teilstücken besteht. Dabei kann auch der Maßstab 2 aus Teilstücken bestehen. Besonders vorteilhaft ist dabei aber, dass als Maßstab 2 ein Maßband Verwendung findet, das über alle Teilstücke des Hohlkörpers 1 hinweg verläuft, insbesondere gespannt ist. In diesem Fall kann die Dichtung 3 über diese mehreren Teilstücke hinweg verlaufen -z.B. auch gespannt - und eine Hülse 4 jeweils nur an den beiden Enden der Gesamtanordnung vorgesehen sein.

## Patentansprüche

1. Längenmesseinrichtung, umfassend ein Hohlprofil (1), in dessen Innenraum ein Maßstab (2) angeordnet ist und das einen längs des Maßstabs (2) verlaufenden Schlitz (11) aufweist, durch den bei der Positionsmessung ein Mitnehmer einer den Maßstab (2) abtastenden Abtasteinheit hindurchgreift, wobei der Schlitz (11) mittels einer längs des Hohlprofils (1) verlaufenden elastischen Dichtung (3) abgedichtet ist und die Dichtung (3) am Hohlprofil (1) fixiert ist,
**dadurch gekennzeichnet, dass**
an der Dichtung (3) eine Hülse (4) zugfest befestigt ist, und die Hülse (4) einen in Längsrichtung (+X, -X) des Hohlprofils (1) wirkenden Anschlag (41) aufweist, mit dem sich die Hülse (4) endseitig am Hohlprofil (1) derart abstützt, dass die Dichtung (3) entlang des Hohlprofils (1) in Längsrichtung gespannt montiert ist und die Hülse (4) die Dichtung (3) am Hohlprofil (1) fixiert.

2. Längenmesseinrichtung nach Anspruch 1, wobei die Dichtung (3) längs des Hohlprofils (1) gedehnt angeordnet ist, indem an den beiden Enden der Dichtung (3) jeweils eine der Hülsen (4) zugfest befestigt ist und sich der Anschlag (41) der Hülsen (4) jeweils endseitig am Hohlprofil (1) abstützt.

3. Längenmesseinrichtung nach Anspruch 1 oder 2, wobei die Hülse (4) zumindest einen nach innen weisenden Vorsprung (42) aufweist, welcher in die Dichtung (3) eindringt und damit die zugfeste Verbindung der Hülse (4) mit der Dichtung (3) bildet.

4. Längenmesseinrichtung nach Anspruch 3, wobei der zumindest eine Vorsprung (42) eine in Längsrichtung (+X) verlaufende erste Form (421) und eine in die Gegenrichtung (-X) weisende zweite Form (422) aufweist, wobei die erste Form (421) eine Rampe bildet, welche es ermöglicht die Hülse (4) in die Längsrichtung (+X) auf die Dichtung (3) zu schieben und die zweite Form (422) einen Widerstand bildet, welcher es verhindert die Hülse (4) gegenüber der Dichtung (3) in die Gegenrichtung (-X) zu verschieben und der Vorsprung (42) dadurch die zugfeste Verbindung zwischen der Dichtung (3) und der Hülse (4) bildet.

5. Längenmesseinrichtung nach Anspruch 3 oder 4, wobei die Hülse (4) mehrere in Längsrichtung (X) voneinander beabstandete und jeweils nach innen weisende Vorsprünge (42) aufweist, welche in die Dichtung (3) eindringen.

6. Längenmesseinrichtung nach einem der vorhergehenden Ansprüche, wobei die Hülse (4) einen Schlitz (45) aufweist und die Dichtung (3) eine Dichtlippe mit einer längsverlaufenden Wulst (31) und einer daran angeformten Lippe (32) ist, wobei die Hülse (4) die Wulst (31) umgreift und die Lippe (32) durch den Schlitz (45) der Hülse (4) in den Schlitz (11) des Hohlprofils (1) ragt.

7. Längenmesseinrichtung nach einem der vorhergehenden Ansprüche, wobei die Hülse (4) in einer längs des Hohlprofils (1) verlaufenden Nut (12) oder Bohrung angeordnet ist.

8. Längenmesseinrichtung nach Anspruch 6 und 7, wobei die Wulst (31) der Dichtlippe die Hülse (4) radial derart vorspannt, dass diese über ihren Umfang elastisch federnd an die Innenfläche der Nut (12) oder Bohrung des Hohlprofils (1) gedrängt wird.

9. Längenmesseinrichtung nach Anspruch 7 oder 8, wobei der Anschlag (41) der Hülse (4) ein radial nach außen weisender Bund der Hülse (4) ist.

10. Verfahren zur Montage einer Längenmesseinrichtung, mit folgenden Verfahrensschritten:
- zur Verfügung stellen eines Hohlprofils (1), das einen längsverlaufenden Schlitz (11) aufweist, durch den bei der Positionsmessung ein Mitnehmer einer einen im Hohlprofil angeordneten Maßstab (2) abtastenden Abtasteinheit hindurchgreift;
- zur Verfügung stellen einer elastischen Dichtung (3), mit der der Schlitz (11) abdichtbar ist,
**gekennzeichnet durch**
- zugfestes Befestigen einer Hülse (4) an der Dichtung (3), wobei die Hülse (4) einen in Längsrichtung (+X, -X) des Hohlprofils (1) wirkenden Anschlag (41) aufweist;
- nachfolgendes Positionieren der Hülse (4) am Hohlprofil (1) derart, dass sich der Anschlag (41) der Hülse (4) endseitig am Hohlprofil (1) abstützt, dass die Dichtung (3) entlang des Hohlprofils (1) in Längsrichtung gespannt montiert wird und die Dichtung (3) dadurch am Hohlprofil (1) fixiert wird.

11. Verfahren nach Anspruch 10, wobei das Positionieren der Hülse (4) am Hohlprofil (1) durch Einschieben der Hülse (4) in eine längsverlaufende Nut (12) oder Bohrung des Hohlprofils (1) von der endseitigen Stirnseite des Hohlprofils (1) her erfolgt.

12. Verfahren nach Anspruch 10 oder 11, wobei die Hülse (4) zumindest einen nach innen weisenden Vorsprung (42) aufweist, der eine in Längsrichtung (+X) verlaufende erste Form (421) und eine in die Gegenrichtung (-X) weisende zweite Form (422) aufweist, wobei die erste Form (421) eine Rampe bildet, welche es ermöglicht die Hülse (4) auf die Dichtung (3) zu schieben und die zweite Form (422) einen Widerstand bildet, welcher es verhindert die Hülse (4) gegenüber der Dichtung (3) in die Gegenrichtung (-X) zu verschieben, wobei die zugfeste Verbindung zwischen der Dichtung (3) und der Hülse (4) durch den Verfahrensschritt Aufschieben der Hülse (4) auf die Dichtung (3) in die Längsrichtung (+X) erfolgt und dabei der Vorsprung (42) in die Dichtung (3) eindringt.

## Claims

1. Length-measuring device comprising a hollow profile (1), in the interior of which a scale (2) is arranged and which has a slot (11), which runs along the scale (2) and through which engages, during the position-measuring operation, a drive dog of a scanning unit which scans the scale (2), wherein the slot (11) is sealed by means of an elastic seal (3), which runs along the hollow profile (1), and the seal (3) is fixed on the hollow profile (1), **characterized in that**
a sleeve (4) is fastened in a tension-resistant manner on the seal (3), and the sleeve (4) has a stop (41), which acts in the longitudinal direction (+X, -X) of the hollow profile (1) and by means of which the sleeve (4) is supported at the end of the hollow profile (1) such that the seal (3) is mounted in a tensioned state in the longitudinal direction along the hollow profile (1), and the sleeve (4) fixes the seal (3) on the hollow profile (1).

2. Length-measuring device according to Claim 1, wherein the seal (3) is arranged in a stretched state along the hollow profile (1) by one of the respective sleeves (4) being fastened in a tension-resistant manner at the two ends of the seal (3) and the stop (41) of each of the sleeves (4) being supported at each end of the hollow profile (1).

3. Length-measuring device according to Claim 1 or 2, wherein the sleeve (4) has at least one inwardly oriented protrusion (42), which penetrates the seal (3) and thus forms the tension-resistant connection between the sleeve (4) and the seal (3).

4. Length-measuring device according to Claim 3, wherein the at least one protrusion (42) has a first shape (421), which runs in the longitudinal direction (+X), and a second shape (422), which is oriented in the opposite direction (-X), wherein the first shape (421) forms a ramp which makes it possible for the sleeve (4) to be pushed onto the seal (3) in the longitudinal direction (+X) and the second shape (422) forms a means of resistance, which prevents the sleeve (4) from being displaced in relation to the seal (3) in the opposite direction (-X), and the protrusion (42) thus forms the tension-resistant connection between the seal (3) and the sleeve (4).

5. Length-measuring device according to Claim 3 or 4, wherein the sleeve (4) has a plurality of respectively inwardly oriented protrusions (42), which are spaced apart from one another in the longitudinal direction (X) and penetrate into the seal (3).

6. Length-measuring device according to one of the preceding claims, wherein the sleeve (4) has a slot (45) and the seal (3) is a sealing lip with a longitudinally running bead (31) and a lip (32) formed thereon, wherein the sleeve (4) engages around the bead (31) and the lip (32) projects through the slot (45) of the sleeve (4) into the slot (11) of the hollow profile (1).

7. Length-measuring device according to one of the preceding claims, wherein the sleeve (4) is arranged in a bore or groove (12) running along the hollow profile (1).

8. Length-measuring device according to Claim 6 and 7, wherein the bead (31) of the sealing lip prestresses the sleeve (4) radially such that the circumference of the sleeve is forced in an elastically resilient manner onto the inner surface of the groove (12) or bore of the hollow profile (1).

9. Length-measuring device according to Claim 7 or 8, wherein the stop (41) of the sleeve (4) is a radially outwardly oriented collar of the sleeve (4).

10. Method for assembling a length-measuring device, having the following method steps:
- providing a hollow profile (1) having a longitudinally running slot (11), through which engages, during the position-measuring operation, a drive dog of a scanning unit which scans a scale (2) arranged in the hollow profile;
- providing an elastic seal (3), by means of which the slot (11) can be sealed;
**characterized by**
- fastening a sleeve (4) in a tension-resistant manner on the seal (3), wherein the sleeve (4) has a stop (41), which acts in the longitudinal direction (+X, -X) of the hollow profile (1);
- subsequently positioning the sleeve (4) on the hollow profile (1) such that the stop (41) of the sleeve (4) is supported at the end of the hollow profile (1) and that the seal (3) is mounted in a tensioned state in the longitudinal direction along the hollow profile (1), and the seal (3) is thus fixed on the hollow profile (1).

11. Method according to Claim 10, wherein the sleeve (4) is positioned on the hollow profile (1) by virtue of the sleeve (4) being pushed into a longitudinally running groove (12) or bore of the hollow profile (1) from the end side of the hollow profile (1).

12. Method according to Claim 10 or 11, wherein the sleeve (4) has at least one inwardly oriented protrusion (42) which has a first shape (421), which runs in the longitudinal direction (+X), and a second shape (422), which is oriented in the opposite direction (-X), wherein the first shape (421) forms a ramp, which makes it possible for the sleeve (4) to be pushed onto the seal (3), and the second shape (422) forms a means of resistance, which prevents the sleeve (4) from being displaced in relation to the seal (3) in the opposite direction (-X), wherein the tension-resistant connection between the seal (3) and the sleeve (4) is established by the method step of pushing the sleeve (4) onto the seal (3) in the longitudinal direction (+X), the protrusion (42) penetrating into the seal (3) in the process.

## Revendications

1. Dispositif de mesure de longueur, comprenant un profilé creux (1) dans l'espace intérieur duquel est disposée une échelle de mesure (2) et qui présente une fente (11) s'étendant le long de l'échelle de mesure (2), à travers laquelle, lors de la mesure de position, s'engage un dispositif d'entraînement d'une unité de balayage balayant l'échelle de mesure (2), la fente (11) étant étanchéifiée au moyen d'un joint d'étanchéité élastique (3) s'étendant le long du profilé creux (1) et le joint d'étanchéité (3) étant fixé au profilé creux (1),
**caractérisé en ce**
**qu'**une douille (4) est fixée de manière résistant à la traction au niveau du joint d'étanchéité (3), et la douille (4) présente une butée (41) agissant dans la direction longitudinale (+X, -X) du profilé creux (1), avec laquelle la douille (4) s'appuie du côté de l'extrémité contre le profilé creux (1), de telle sorte que le joint d'étanchéité (3) soit monté de manière tendue le long du profilé creux (1) dans la direction longitudinale et que la douille (4) fixe le joint d'étanchéité (3) au profilé creux (1).

2. Dispositif de mesure de longueur selon la revendication 1, dans lequel le joint d'étanchéité (3) est disposé de manière étirée le long du profilé creux (1) par le fait qu'à chaque fois l'une des douilles (4) est fixée de manière résistant à la traction au niveau des deux extrémités du joint d'étanchéité (3), et que la butée (41) des douilles (4) s'appuie à chaque fois du côté de l'extrémité contre le profilé creux (1).

3. Dispositif de mesure de longueur selon la revendication 1 ou 2, dans lequel la douille (4) présente au moins une saillie (42) orientée vers l'intérieur, laquelle pénètre dans le joint d'étanchéité (3) et forme ainsi la liaison résistant à la traction de la douille (4) au joint d'étanchéité (3).

4. Dispositif de mesure de longueur selon la revendication 3, dans lequel l'au moins une saillie (42) présente une première forme (421) s'étendant dans la direction longitudinale (+X), et présente une deuxième forme (422) orientée dans la direction opposée (-X), la première forme (421) formant une rampe qui permet de pousser la douille (4) dans la direction longitudinale (+X) sur le joint d'étanchéité (3) et la deuxième forme (422) formant une résistance qui empêche de déplacer la douille (4) par rapport au joint d'étanchéité (3) dans la direction opposée (-X) et la saillie (42) forme de ce fait la liaison résistant à la traction entre le joint d'étanchéité (3) et la douille (4).

5. Dispositif de mesure de longueur selon la revendication 3 ou 4, dans lequel la douille (4) présente plusieurs saillies (42) espacées les unes des autres dans la direction longitudinale (X) et à chaque fois orientées vers l'intérieur, lesquelles pénètrent dans le joint d'étanchéité (3).

6. Dispositif de mesure de longueur selon l'une quelconque des revendications précédentes, dans lequel la douille (4) présente une fente (45) et le joint d'étanchéité (3) est une lèvre d'étanchéité avec un bourrelet (31) s'étendant longitudinalement et une lèvre (32) façonnée sur celui-ci, la douille (4) venant en prise autour du bourrelet (31) et la lèvre (32) pénétrant à travers la fente (45) de la douille (4) dans la fente (11) du profilé creux (1).

7. Dispositif de mesure de longueur selon l'une quelconque des revendications précédentes, dans lequel la douille (4) est disposée dans une rainure (12) ou un alésage s'étendant le long du profilé creux (1).

8. Dispositif de mesure de longueur selon les revendications 6 et 7, dans lequel le bourrelet (31) de la lèvre d'étanchéité précontraint radialement la douille (4) de telle sorte que celle-ci soit poussée de manière élastique à ressort sur sa périphérie contre la surface interne de la rainure (12) ou de l'alésage du profilé creux (1).

9. Dispositif de mesure de longueur selon la revendication 7 ou 8, dans lequel la butée (41) de la douille (4) est un épaulement de la douille (4), orienté radialement vers l'extérieur.

10. Procédé de montage d'un dispositif de mesure de longueur comprenant les étapes de procédé suivantes
- fournir un profilé creux (1) qui présente une fente (11) s'étendant longitudinalement, à travers laquelle, lors de la mesure de position, s'engage un dispositif d'entraînement d'une unité de balayage balayant une échelle de mesure (2) disposée dans le profilé creux ;
- fournir un joint d'étanchéité élastique (3) avec lequel la fente (11) peut être étanchéifiée,
**caractérisé par** les étapes consistant à
- fixer de manière résistant à la traction une douille (4) contre le joint d'étanchéité (3), la douille (4) présentant une butée (41) agissant dans la direction longitudinale (+X, -X) du profilé creux (1) ;
- positionner ensuite la douille (4) contre le profilé creux (1) de telle sorte que la butée (41) de la douille (4) s'appuie du côté de l'extrémité contre le profilé creux (1), que le joint d'étanchéité (3) soit monté de manière tendue le long du profilé creux (1) dans la direction longitudinale, et que le joint d'étanchéité (3) soit ainsi fixé au profilé creux (1) .

11. Procédé selon la revendication 10, dans lequel le positionnement de la douille (4) contre le profilé creux (1) s'effectue par insertion de la douille (4) dans une rainure (12) ou un alésage s'étendant longitudinalement du profilé creux (1) depuis le côté frontal du profilé creux (1) du côté de l'extrémité.

12. Procédé selon 1a revendication 10 ou 11, dans lequel la douille (4) présente au moins une saillie (42) orientée vers l'intérieur, laquelle présente une première forme (421) s'étendant dans la direction longitudinale (+X), et présente une deuxième forme (422) orientée dans la direction opposée (-X), la première forme (421) formant une rampe qui permet de pousser la douille (4) sur le joint d'étanchéité (3) et la deuxième forme (422) formant une résistance qui empêche de déplacer la douille (4) par rapport au joint d'étanchéité (3) dans la direction opposée (-X) la liaison résistant à la traction entre le joint d'étanchéité (3) et la douille (4) s'effectuant par l'étape de procédé consistant à pousser la douille (4) sur le joint d'étanchéité (3) dans la direction longitudinale (+X) et la saillie (42) pénétrant de ce fait dans le joint d'étanchéité (3).
